# FASCICULE DE BREVET EUROPEEN

(11) **EP 2 922 717 B1**
(45) Date de publication et mention de la délivrance du brevet: **04.01.2017**
(21) Numéro de dépôt: 13799230.1
(22) Date de dépôt: 18.11.2013
(51) Int. Cl.: B60H 1/26, B60J 7/22

(54) **PRISE D'AIR DE TOIT D'UN VÉHICULE AUTOMOBILE**
LUFTEINLASS FÜR KRAFTFAHRZEUGDACH
MOTOR VEHICLE ROOF AIR INTAKE

(30) Priorité: 26.11.2012 FR 1261222
(43) Date de publication de la demande: 30.09.2015
(73) Titulaire: Renault S.A.S., 92100 Boulogne-Billancourt (FR)
(72) Inventeur: JUHASZ, Tibor, F-78960 Voisins Le Bretonneux (FR)
(86) Numéro de dépôt international: PCT/EP2013/074100
(87) Numéro de publication internationale: WO 2014/079817

(56) Documents cités:
- DE-A1- 2 160 760
- US-A- 2 250 614
- US-A- 3 401 620

## Description

### Domaine de l'invention :

La présente invention concerne une prise d'air de toit d'un véhicule automobile telle que divulguée par US 3,401,620.

### Etat de la technique :

On connaît des véhicules à caractère sportif équipés de prise d'air de toit permettant de capter de l'air extérieur au véhicule pour l'acheminer à l'intérieur et ainsi aérer l'habitacle.

Des prises d'air classiques comprennent un carénage fixé au toit et surplombant un passage d'air conformé dans le toit, en communication avec l'habitacle du véhicule. Le carénage forme un boitier comprenant typiquement une platine supérieure et une platine inférieure sensiblement parallèles entre elles, ces platines étant reliées par leurs bords latéraux, de façon à définir un canal d'écoulement d'air entre une entrée d'air à l'avant, et une sortie d'air à l'arrière. La platine inférieure qui est fixée au toit du véhicule comporte classiquement un orifice dans une zone centrale, qui est disposé au droit du passage d'air, c'est-à-dire mis en communication avec celui-ci de façon à permettre l'introduction de l'air dans l'habitacle au travers de l'orifice et du passage d'air. L'écoulement de l'air dans le canal s'effectue de façon naturelle en raison de la vitesse prise par le véhicule.

On observe que l'air frais pénètre insuffisamment dans l'habitacle lorsque le véhicule avance avec une vitesse inférieure à une vitesse prédéterminée, ce qui ne permet pas un renouvellement efficace de l'air.

### But de l'invention :

L'invention a pour but d'améliorer l'aération de l'habitacle du véhicule, en particulier lorsque le véhicule roule à une allure faible ou modérée, sans dégrader l'efficacité du système lorsque le véhicule roule à vive allure.

### Objet de l'invention :

A cet effet, l'invention a pour objet une prise d'air de toit d'un véhicule automobile comprenant un carénage fixé au toit et surplombant un passage d'air conformé dans le toit, en communication avec l'habitacle du véhicule, le carénage comprenant une platine supérieure reliée à une platine inférieure par leurs bords latéraux, de façon à définir un canal d'écoulement d'air entre une entrée d'air conformée en partie avant du carénage et une sortie d'air conformée en partie arrière du carénage, la platine inférieure comportant un orifice disposé au droit du passage d'air, caractérisée en ce qu'elle comprend au moins un guide d'air flexible disposé dans le canal, apte à être déformé sous l'influence de la pression d'air pénétrant par l'entrée d'air, le guide d'air étant déplaçable entre une position de repos rapprochée et une position éloignée du passage d'air lorsqu'une pression d'air respectivement basse et haute est appliquée sur le guide d'air, ces pressions d'air correspondant respectivement à une petite et une grande vitesse de déplacement du véhicule.

La prise d'air constitue de ce fait un équipement actif qui adapte automatiquement ses performances en fonction de la vitesse du véhicule. Lorsque le véhicule roule à faible allure, le guide d'air se resserre automatiquement autour du passage d'air de façon à limiter l'écoulement vers la sortie d'air et à favoriser l'introduction dans le passage d'air. Le guide d'air reprend élastiquement sa forme naturelle vers la position rapprochée du passage (ou position de repos) lorsque la pression d'air appliquée sur le guide d'air ne s'y oppose pas. A l'inverse lorsque le véhicule reprend de la vitesse, la pression d'air augmente. L'effort appliqué sur le guide d'air va à l'encontre du retour élastique du guide d'air vers sa position de repos, et tend à écarter le guide d'air du passage en le déplaçant vers la position éloignée du passage d'air. Cet effet d'écartement du guide d'air favorise l'écoulement longitudinal de l'air entre l'entrée et la sortie lorsqu'un débit d'air important est généré dans le canal. Dans ce cas il est en effet important de ne pas bloquer l'air par un effet de « parachute » insuffisamment ouvert sur l'arrière.

Selon d'autres caractéristiques avantageuses de l'invention :
- la prise d'air comprend deux guides d'air disposés de façon symétriques de part et d'autre du passage d'air,
- les guides d'air sont chacun constitués d'une lamelle souple s'étendant de façon sensiblement perpendiculaire à la platine inférieure, laquelle est sensiblement parallèle à la surface du toit,
- les guides d'air sont fixés à la platine inférieure par leur extrémité avant tandis que leur extrémité arrière est libre et peut débattre latéralement par une flexion de la lamelle,
- la sortie d'air comporte un pied central reliant les platines supérieure et inférieure, les extrémités arrière des guides d'air étant adjacentes aux bords latéraux du pied lorsque les guides d'air sont dans la position rapprochée du passage d'air et étant situées à distance du pied central lorsque les guides d'air sont dans la position éloignée du passage d'air,
- les extrémités avant des guides d'air sont sensiblement tangentes à des droites parallèles à la direction longitudinale du véhicule, tandis que les extrémités arrière se débattent transversalement à l'intérieur de l'espace délimité par ces droites sous l'influence de la pression d'air,
- les guides d'air tendent à s'aligner suivant des directions sensiblement parallèles à la direction longitudinale du véhicule avec une augmentation de la pression d'air,
- le carénage et les guides d'air sont réalisés en matière plastique, les guides d'air ayant une épaisseur comprise entre 1 et 5 mm.

L'invention a également pour objet un véhicule automobile comprenant une prise d'air ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue partielle de côté d'un véhicule automobile, illustrant la zone d'implantation d'une prise de toit suivant l'invention,
- les figures 2 et 3 représentent des vues en perspective et de dessus de la prise d'air de la figure 1, les guides d'air étant dans la position rapprochée du passage d'air, correspond à une allure modérée du véhicule, et
- les figures 4 et 5 représentent des vues similaires aux figures 2 et 3, les guides d'air étant dans la position éloignée du passage d'air, correspondant à une vive allure du véhicule.

Dans la présente description, les directions et orientations sont indiquées en référence au repère classiquement utilisé dans la conception des véhicules, dans lequel X désigne la direction longitudinale du véhicule, orienté vers l'arrière, Y la direction transversal au véhicule, orienté vers la droite, et Z la direction verticale, vers le haut.

Les notions « avant » et « arrière » sont indiquées en référence à l'orientation longitudinale avant-arrière du véhicule.

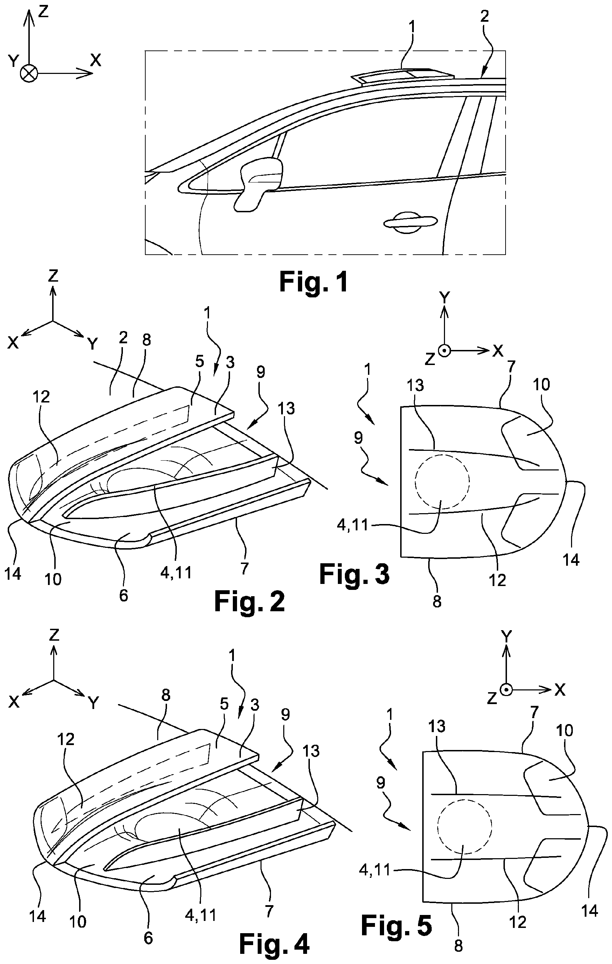

On a représenté à la figure 1 une vue de côté d'un véhicule automobile, limitée à la zone qui nous intéresse au niveau du toit et des passagers avant du véhicule.

Le véhicule comprend une prise d'air 1 fixée sur une partie avant du toit 2, et de préférence centrée suivant la direction transversale Y du véhicule. En référence aux figures 2 à 5, la prise d'air 1 comprend un carénage 3 surplombant un passage d'air 4 conformé dans le toit 2, en communication avec l'habitacle du véhicule. Le carénage 3 comprend une platine supérieure 5 et une platine inférieure 6 superposées et sensiblement parallèles l'une à l'autre, ces platines 5, 6 étant sensiblement parallèles à la surface supérieure du toit 2, considérée localement, sur laquelle la prise d'air 1 est fixée. Les platines 5, 6 sont reliée l'une à l'autre par leurs bords latéraux 7, 8 qui s'étendent essentiellement suivant la direction longitudinale X du véhicule. La prise d'air définit entre les platines 5, 6 et les bords latéraux 7, 8 un canal d'écoulement d'air entre une entrée d'air 9 conformée en partie avant du carénage et une sortie d'air 10 conformée en partie arrière du carénage. La platine inférieure 6 comporte un orifice 11 disposé au droit du passage d'air 4. La prise d'air 1 comprend deux guides d'air 12, 13 flexibles disposés dans le canal, de façon symétrique de part et d'autre du passage d'air 4. Ces guides d'air 12,13 se présentent sous la forme de deux lamelles souples s'étendant de façon sensiblement perpendiculaire à la platine inférieure 6.

Les guides d'air 12,13 sont fixés à la platine inférieure 6 par leur extrémité avant tandis que leur extrémité arrière est libre et peut débattre latéralement suivant la direction Y par une flexion des lamelles.

Les extrémités avant des guides d'air 12,13 sont sensiblement tangentes à des droites parallèles à la direction longitudinale X du véhicule. Les extrémités arrière peuvent être déplacées en se débattant transversalement (suivant la direction Y) à l'intérieur de l'espace délimité par ces droites sous l'influence de la pression d'air entrant dans le canal par l'entrée d'air 9 comme expliqué ci-après.

En effet, lorsque le véhicule avance, la prise d'air agit à la façon d'un avaloir. L'air pénètre par l'entrée d'air 9 et s'écoulent à l'intérieur du canal délimité par le carénage de la prise d'air. Cet écoulement s'effectue vers l'arrière du véhicule, suivant la direction longitudinale X. La pression d'air généré dans le canal est mise à profit pour exercer un effort sur les guides d'air 12,13 (lamelles souples) de façon à changer leur forme ou disposition. Dans une position de repos, les guides d'air 12, 13 occupent une position rapprochée du passage d'air 4, telle qu'illustrée aux figures 2 et 3. Dans cette position, le véhicule progresse à une vitesse modérée ou faible. Les extrémités arrière des guides d'air 12, 13 sont donc rapprochées l'une de l'autre, ce qui a tendance à restreindre la section du canal vers la sortie d'air 10, et par conséquent limite le débit d'air vers la sortie d'air 10.

De ce fait, ceci favorise l'acheminement de l'air frais dans l'habitacle du véhicule, l'air ayant tendance à s'évacuer au travers de l'orifice 11 et du passage d'air 4.

Comme on le voit aux figures 2 et 3, la prise d'air comporte également un pied central 14 reliant les platines supérieure 5 et inférieure 6, séparant ainsi la sortie d'air 10 en deux zones juxtaposées suivant la direction Y. Les extrémités arrière des guides d'air 12, 13 sont adjacentes aux bords latéraux du pied 14 lorsque les guides d'air sont dans la position rapprochée du passage d'air 4. Ceci augmente encore l'efficacité du dispositif en occultant l'espace séparant les extrémités arrière des guides d'air 12, 13.

Une autre position des guides d'air est illustrée aux figures 4 et 5, correspondant à une allure ou vitesse plus importante du véhicule. Les notions d'allure ou vitesse modérée ou importe (ou petite ou grande) ne sont pas absolues mais s'entendent de façon relative.

Ainsi à grande vitesse, la pression d'air augmente dans le canal ce qui a pour effet de forcer les extrémités arrière des guides d'air à s'écarter latéralement (suivant la direction transversale Y) du passage d'air 4. Les guides d'air 12, 13 sont de ce fait contraints de s'écarter de leur position de repos pour aller vers une position éloignée du passage d'air 4, comme illustré aux figures 4 et 5.

Dans ce cas, les extrémités arrière des guides d'air 12, 13 sont éloignées des bords latéraux du pied 14. Ceci limite l'occultation à l'arrière du canal et favorise l'écoulement de l'air vers la sortie d'air 10. Ceci a pour effet d'ouvrir la section du canal donnant accès à la sortie d'air 10. A grande vitesse, l'air frais entrant dans l'habitacle est en effet suffisant. La prise d'air 1 de l'invention permet d'évacuer l'air en surplus par la sortie d'air 10 de façon à limiter la résistance à l'écoulement.

On limite de ce fait l'effet parachute dans la prise d'air qui induirait une résistance trop importance, préjudiciable à l'aérodynamisme du véhicule. On note qu'à vitesse élevée, les guides d'air 12, 13 ont tendance à s'aligner de façon parallèle l'un à l'autre, suivant la direction longitudinale X du véhicule.

On note en outre que le carénage 3 et les guides d'air 12, 13 sont réalisés en matière plastique. Les guides d'air 12, 13 ont une épaisseur comprise entre 1 et 5 mm, typiquement d'environ 2-3 mm.

Ainsi la prise d'air de l'invention est un système actif qui s'adapte automatiquement à la vitesse du véhicule. Les guides d'air agissent à la façon d'un diaphragme qui se referme automatiquement lorsque la vitesse du véhicule n'est pas trop importante et que la pression d'air est limitée dans le canal, et qui s'ouvre automatiquement lorsque la vitesse du véhicule est plus importante et que la pression d'air dans le canal augmente au-delà d'un seuil donné.

Bien entendu, l'invention n'est pas limitée aux modes ou variantes de réalisation décrits précédemment.

## Revendications

1. Prise d'air (1) de toit (2) d'un véhicule automobile comprenant un carénage (3) fixé au toit (2) et surplombant un passage d'air (4) conformé dans le toit (2), en communication avec l'habitacle du véhicule, le carénage (3) comprenant une platine supérieure (5) reliée à une platine inférieure (6) par leurs bords latéraux (7, 8), de façon à définir un canal d'écoulement d'air entre une entrée d'air (9) conformée en partie avant du carénage (3) et une sortie d'air (10) conformée en partie arrière du carénage (3), la platine inférieure (6) comportant un orifice (11) disposé au droit du passage d'air (4), **caractérisée en ce qu'**elle comprend au moins un guide d'air (12, 13) flexible disposé dans le canal, apte à être déformé sous l'influence de la pression d'air pénétrant par l'entrée d'air (9), le guide d'air (12, 13) étant déplaçable entre une position de repos rapprochée et une position éloignée du passage d'air (4) lorsqu'une pression d'air respectivement basse et haute est appliquée sur le guide d'air (4), ces pressions d'air correspondant respectivement à une petite et une grande vitesse de déplacement du véhicule.

2. Prise d'air selon la revendication 1, **caractérisée en ce qu'**elle comprend deux guides d'air (12, 13) disposés de façon symétriques de part et d'autre du passage d'air (4).

3. Prise d'air selon la revendication 2, **caractérisée en ce que** les guides d'air (12, 13) sont chacun constitués d'une lamelle souple s'étendant de façon sensiblement perpendiculaire à la platine inférieure (6), laquelle est sensiblement parallèle à la surface du toit (2).

4. Prise d'air selon la revendication 3, **caractérisée en ce que** les guides d'air (12, 13) sont fixés à la platine inférieure (6) par leur extrémité avant tandis que leur extrémité arrière est libre et peut débattre latéralement par une flexion de la lamelle.

5. Prise d'air selon la revendication 4, **caractérisée en ce que** la sortie d'air (10) comporte un pied (14) central reliant les platines supérieure (5) et inférieure (6), les extrémités arrière des guides d'air (12, 13) étant adjacentes aux bords latéraux du pied (14) lorsque les guides d'air (12, 13) sont dans la position rapprochée du passage d'air (4) et étant situées à distance du pied (14) central lorsque les guides d'air (12,13) sont dans la position éloignée du passage d'air (4).

6. Prise d'air selon l'une quelconque des revendications 3 à 5, **caractérisée en ce que** les extrémités avant des guides d'air (12, 13) sont sensiblement tangentes à des droites parallèles à la direction longitudinale (X) du véhicule, tandis que les extrémités arrière se débattent transversalement à l'intérieur de l'espace délimité par ces droites sous l'influence de la pression d'air.

7. Prise d'air selon la revendication 6, **caractérisé en ce que** les guides d'air (12, 13) tendent à s'aligner suivant des directions sensiblement parallèles à la direction longitudinale (X) du véhicule avec une augmentation de la pression d'air.

8. Prise d'air selon l'une quelconque des revendications précédentes, **caractérisé en ce que** le carénage (3) et les guides d'air (12, 13) sont réalisés en matière plastique, les guides d'air (12, 13) ayant une épaisseur comprise entre 1 et 5 mm.

9. Véhicule automobile, **caractérisé en ce qu'**il comprend une prise d'air suivant l'une quelconque des revendications précédentes.

## Patentansprüche

1. Lufteinlass (1) eines Dachs (2) eines Kraftfahrzeugs, der eine am Dach (2) befestigte und einen im Dach (2) ausgebildeten Luftdurchlass (4) überlagernde Verkleidung (3) enthält, in Verbindung mit dem Innenraum des Fahrzeugs, wobei die Verkleidung (3) eine obere Platte (5) enthält, die mit einer unteren Platte (6) über ihre Seitenränder (7, 8) verbunden ist, um einen Luftströmungskanal zwischen einem Lufteintritt (9), der im vorderen Teil der Verkleidung (3) ausgebildet ist, und einem Luftaustritt (10) zu definieren, der im hinteren Teil der Verkleidung (3) ausgebildet ist, wobei die untere Platte (6) eine Öffnung (11) aufweist, die vor dem Luftdurchlass (4) angeordnet ist, **dadurch gekennzeichnet, dass** er mindestens eine im Kanal angeordnete elastische Luftführung (12, 13) enthält, die unter dem Einfluss des Drucks einer durch den Lufteintritt (9) eindringenden Luft verformt werden kann, wobei die Luftführung (12, 13) zwischen einer dem Luftdurchlass (4) angenäherten Ruhestellung und einer entfernten Stellung verschoben werden kann, wenn ein niedriger bzw. hoher Luftdruck auf die Luftführung (4) angewendet wird, wobei diese Luftdrücke einer niedrigen bzw. einer hohen Fahrgeschwindigkeit des Fahrzeugs entsprechen.

2. Lufteinlass nach Anspruch 1, **dadurch gekennzeichnet, dass** er zwei Luftführungen (12, 13) enthält, die symmetrisch zu beiden Seiten des Luftdurchlasses (4) angeordnet sind.

3. Lufteinlass nach Anspruch 2, **dadurch gekennzeichnet, dass** die Luftführungen (12, 13) je aus einer geschmeidigen Lamelle bestehen, die sich im Wesentlichen lotrecht zur unteren Platte (6) erstreckt, die im Wesentlichen parallel zur Oberfläche des Dachs (2) ist.

4. Lufteinlass nach Anspruch 3, **dadurch gekennzeichnet, dass** die Luftführungen (12, 13) an der unteren Platte (6) über ihr vorderes Ende befestigt sind, während ihr hinteres Ende frei ist und seitlich durch eine Biegung der Lamelle ausschlagen kann.

5. Lufteinlass nach Anspruch 4, **dadurch gekennzeichnet, dass** der Luftaustritt (10) einen zentralen Fuß (14) aufweist, der die obere (5) und untere Platte (6) verbindet, wobei die hinteren Enden der Luftführungen (12, 13) den Seitenrändern des Fußes (14) benachbart sind, wenn die Luftführungen (12, 13) in der dem Luftdurchlass (4) angenäherten Stellung sind, und sich in Abstand zum zentralen Fuß (14) befinden, wenn die Luftführungen (12, 13) sich in der vom Luftdurchlass (4) entfernten Stellung befinden.

6. Lufteinlass nach einem der Ansprüche 3 bis 5, **dadurch gekennzeichnet, dass** die vorderen Enden der Luftführungen (12, 13) im Wesentlichen Geraden parallel zur Längsrichtung (X) des Fahrzeugs tangieren, während die hinteren Enden unter dem Einfluss des Luftdrucks quer im Inneren des Raums ausschlagen, der von diesen Geraden begrenzt wird.

7. Lufteinlass nach Anspruch 6, **dadurch gekennzeichnet, dass** die Luftführungen (12, 13) die Tendenz haben, sich bei einer Erhöhung des Luftdrucks gemäß Richtungen im Wesentlichen parallel zur Längsrichtung (X) des Fahrzeugs auszurichten.

8. Lufteinlass nach einem der vorhergehenden Ansprüche, **dadurch gekennzeichnet, dass** die Verkleidung (3) und die Luftführungen (12, 13) aus Kunststoff hergestellt werden, wobei die Luftführungen (12, 13) eine Dicke zwischen 1 und 5 mm haben.

9. Kraftfahrzeug, **dadurch gekennzeichnet, dass** es einen Lufteinlass nach einem der vorhergehenden Ansprüche enthält.

## Claims

1. Air intake (1) for a roof (2) of a motor vehicle, comprising a fairing (3) fixed to the roof (2) and overhanging an air passage (4) formed in the roof (2) in communication with the passenger compartment of the vehicle, the fairing (3) comprising an upper plate (5) connected to a lower plate (6) by their lateral edges (7, 8) so as to define a duct for the flow of air between an air inlet (9) formed in the front part of the fairing (3) and an air outlet (10) formed in the rear part of the fairing (3), the lower plate (6) comprising an orifice (11) arranged in line with the air passage (4), **characterized in that** it comprises at least one flexible air guide (12, 13) arranged in the duct and able to be deformed under the influence of the pressure of air passing through the air inlet (9), the air guide (12, 13) being moveable between a rest position close to the air passage (4) and a position away from the air passage (4) when a respectively low and high air pressure is applied to the air guide (4), these air pressures respectively corresponding to a low and a high speed of travel of the vehicle.

2. Air intake according to Claim 1, **characterized in that** it comprises two air guides (12, 13) arranged symmetrically on either side of the air passage (4).

3. Air intake according to Claim 2, **characterized in that** the air guides (12, 13) are each formed by a flexible lamella extending substantially perpendicular to the lower plate (6), which is substantially parallel to the surface of the roof (2).

4. Air intake according to Claim 3, **characterized in that** the air guides (12, 13) are fixed to the lower plate (6) by their front end, while their rear end is free and can deflect laterally through a bending of the lamella.

5. Air intake according to Claim 4, **characterized in that** the air outlet (10) comprises a central foot (14) connecting the upper (5) and lower (6) plates, the rear ends of the air guides (12, 13) being adjacent to the lateral edges of the foot (14) when the air guides (12, 13) are in the position close to the air passage (4) and being situated at a distance from the central foot (14) when the air guides (12, 13) are in the position away from the air passage (4).

6. Air intake according to any one of Claims 3 to 5, **characterized in that** the front ends of the air guides (12, 13) are substantially tangent to straight lines parallel to the longitudinal direction (X) of the vehicle, while the rear ends deflect transversely within the space delimited by these straight lines under the influence of the air pressure.

7. Air intake according to Claim 6, **characterized in that** the air guides (12, 13) tend to align themselves in directions substantially parallel to the longitudinal direction (X) of the vehicle with an increase in the air pressure.

8. Air intake according to any one of the preceding claims, **characterized in that** the fairing (3) and the air guides (12, 13) are made of plastic, the air guides (12, 13) having a thickness between 1 and 5 mm.

9. Motor vehicle, **characterized in that** it comprises an air intake according to any one of the preceding claims.
